# EUROPEAN PATENT APPLICATION

(11) **EP 3 040 211 A1**
(43) Date of publication of application: **06.07.2016**
(21) Application number: 15197394.8
(22) Date of filing: 01.12.2015
(51) Int. Cl.: B60B 33/00, A45C 5/14

(54) **DETACHABLE UNIVERSAL WHEEL**

(30) Priority: 11.12.2014 CN 201420786227 U
(71) Applicant: Shanghai Newest Luggage Co., Ltd., Jinshan Shanghai (CN)
(72) Inventor: Wang, Xiangjun, Jinshan Shanghai (CN)
(74) Representative: Lang, Christian

(57) **Abstract**

Abstract (containing automatically inserted reference signs)

The present application discloses a detachable universal wheel (3), including an angle-wrapping part, a wheel carrier (2), a wheel (3) fixed in the wheel carrier (2), a stucking part, a fixed shaft (5), and a locking cap (6). The stucking part including a protruding edge (7) has the rotary connection with the bottom of the angle-wrapping part, and the protruding edge (7) has a couple of inner through-holes (10, 8) with opposite position. At the top of wheel carrier (2) is provided with a fillister (9), which has the shape matching with that of the protruding edge (7) and has a couple of outer through-holes (10, 8) with opposite position. When the protruding edge (7) of the stucking part is placed into the fillister (9) which is at the top of the wheel carrier (2), the inner through-holes (10, 8) are in line with the outer through-holes (10, 8). The fixed shaft (5) can cross through the inner and outer through-holes (10, 8), with thread at its exposed end. The locking cap (6) can be screwed onto the exposed end of the fixed shaft (5) to achieve the aim of locking. Due to the structural math between the protruding edge (7) of the stucking part and the fillister (9) of the wheel carrier (2) and through the screwing and detaching of the fixed shaft (5) and locking cap (6), the detachable universal wheel (3) disclosed by the present application has simple and reliable structure and is convenient to be detached.

## Description

### FIELD

This application relates to wheel devices, and more particularly to a detachable universal wheel.

### BACKGROUND

Universal wheels, generally fixed at the bottom of luggage, handcart and so on, are commonly used in daily life. Because they are usually undetachable, many inconveniences have been caused. For instance, they are not easy to place and liable to free slide which may lead to security problems. At present, there are some detachable universal wheels, but either their structures are complicated or unreliable, or it is unpleasant to detach them.

### BRIEF SUMMARY

In view of this, an object of the present application is to disclose a detachable universal wheel which has simple and reliable structure and is convenient to be detached.

To achieve the above object, the present application provides a detachable universal wheel, comprising an angle-wrapping part, a wheel carrier, a wheel fixed in the wheel carrier, a stucking part, a fixed shaft, and a locking cap. The stucking part including a protruding edge has the rotary connection with the bottom of the angle-wrapping part, and the protruding edge has a couple of inner through-holes with opposite position. At the top of wheel carrier is provided with a fillister, which has the shape matching with that of the protruding edge and has a couple of outer through-holes with opposite position. When the protruding edge of the stucking part is placed into the fillister which is at the top of the wheel carrier, the inner through-holes are in line with the outer through-holes. The fixed shaft can cross through the inner and outer through-holes, with thread at its exposed end. The locking cap can be screwed onto the exposed end of the fixed shaft to achieve the aim of locking.

Preferably, the top of the stucking part is provided with ball bearing.

Preferably, the outer surface of the wheel is coated with shock-proof and wear-resistant material.

As can be seen from the above statement, the detachable universal wheel disclosed by the present application has simple and reliable structure and is convenient to be detached due to the structural math between the protruding edge of the stucking part and the fillister of the wheel carrier and through the screwing and detaching of the fixed shaft and locking cap.

### BRIEF DESCRIPTION OF THE DRAWINGS

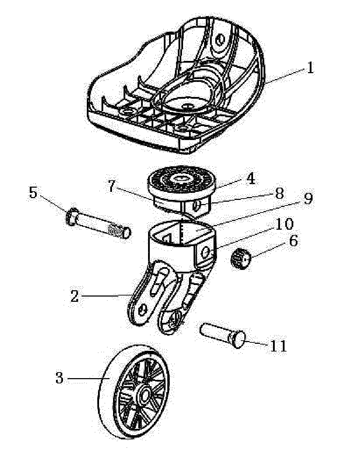

**Fig. 1** is a schematic exploded structural view of a universal detachable wheel according to one embodiment of the present application.

### DETAILED DESCRIPTION OF ILLUSTRATIVE EMBODIMENTS

To clarify the objectives, technical solutions and advantages of the present application, detailed descriptions are given below by combining the specific embodiment with the accompanying drawing.

The exploded structural view of a universal detachable wheel according to one embodiment of the application is illustrated by reference to **Fig. 1.**

The embodiment of the present application provides a detachable universal wheel, comprising an angle-wrapping part 1, a wheel carrier 2, a wheel 3 fixed in the wheel carrier, a stucking part 4, a fixed shaft 5, and a locking cap 6. The stucking part 4 including a protruding edge 7 has the rotary connection with the bottom of the angle-wrapping part 1, and the protruding edge 7 has a couple of inner through-holes 8 with opposite position. At the top of wheel carrier 2 is provided with a fillister 9, which has the shape matching with that of the protruding edge 7 and has a couple of outer through-holes 10 with opposite position. When the protruding edge 7 of the stucking part 4 is placed into the fillister 9 at the top of the wheel carrier 2, the inner through-holes 8 are in line with the outer through-holes 10. The fixed shaft 5 can cross through the inner through-holes 8 and outer through-holes 10 with thread at its exposed end. The locking cap 6 can be screwed onto the exposed end of the fixed shaft 5 to achieve the aim of locking.

According to the above embodiment of the application, the protruding edge 7 of the stucking part 4 matches structurally with the fillister 9 of the wheel carrier 2, and the locking and detaching between the upper part and lower part of the detachable universal wheel are achieved through the fixed shaft 5 and the locking cap 6. The upper part includes an angle-wrapping part 1 and a stucking part 4; the angle-wrapping part 1 is used to connect with the bottom of sliding devices (e.g. luggage, handcart), and the top of the stucking part 4 is provided with ball bearing, which has the rotary connection with the angle-wrapping part 1 through connecting pieces and auxiliary filler pieces. The lower part includes a wheel carrier 2 and a wheel 3; the wheel 3 is connected with the wheel carrier 2 through a small shaft 11. In the content stated above, the structure and working mode of the angle-wrapping 1, wheel carrier 2 and wheel 3 are common known technology, and they are thus not detailed in the embodiment of the present application.

Typically, the upper part and lower part of the detachable universal wheel of this embodiment are locked together. The protruding edge 7 of the stucking part 4 is placed within the fillister 9 of the wheel carrier 2. Because of structural match, the protruding edge 7 and the fillister 9 are a tight fit and there will be no relative movement between them. The inner through-holes 8 of the protruding edge 7 are in line with the outer through-holes 10 of the fillister 9. The inner through-holes have the same diameter as the outer through-holes, and both of them have the similar diameter to the fixed shaft 5. The fixed shaft 5 crosses through the inner through-holes 8 and outer through-holes 10 and fastens the stucking part 4 with the wheel carrier 2. One end with thread of the fixed shaft 5 will protrude the fillister 9. The locking cap 6 is screwed onto the exposed end of the fixed shaft 5 to achieve the aim of locking of the detachable universal wheel of this embodiment.

When detaching is required, the locking cap 6 is unscrewed and taken down, and then the exposed end of the fixed shaft 5 is pushed gently, and then a stub of the another end of the fixed shaft 5 will give back from the fillister 9, and then the another end of the fixed shaft 5 can be held and drawn it out. Through these procedures, the wheel carrier 2 can be detached.

According to some other embodiments of the application, the outer surface of the wheel 3 can be coated with shock-proof and wear-resistant material with the aim of guaranteeing use effect and extending service life of the wheel 3.

Finally, the skilled in the art should understand that the above embodiment is merely to illustrate the technical solutions of the application but not for limitation, and any modification, replacement and change within the spirit and principles of the present application should be fallen into the scope of the present application.

## Claims

1. A detachable universal wheel, including an angle-wrapping part, a wheel carrier, a wheel fixed in the wheel carrier, a stucking part, a fixed shaft, and a locking cap, wherein the wherein the stucking part including a protruding edge having a couple of inner through-holes with opposite position has the rotary connection with the bottom of the angle-wrapping part, and at the top of wheel carrier is provided with a fillister, which has the shape matching with that of the protruding edge and has a couple of outer through-holes with opposite position; when the protruding edge of the stucking part is placed into the fillister which is at the top of the wheel carrier, the inner through-holes are in line with the outer through-holes, the fixed shaft cross through the inner and outer through-holes with thread at its exposed end and then the locking cap is screwed onto the exposed end of the fixed shaft to achieve the aim of locking..

2. The detachable universal wheel according to claim 1, wherein the top of the stucking part is provided with ball bearing.

3. The detachable universal wheel according to claim 1, wherein the outer surface of the wheel is coated with shock-proof and wear-resistant material.
